# EUROPEAN PATENT APPLICATION

(11) **EP 4 411 474 A1**
(43) Date of publication of application: **07.08.2024**
(21) Application number: 22887321.2
(22) Date of filing: 01.09.2022
(51) Int. Cl.: G03B 13/36, G03B 3/00, G03B 30/00, H02K 33/18

(54) **ELECTRONIC DEVICE COMPRISING CAMERA MODULE AND METHOD FOR OPERATING ELECTRONIC DEVICE**

(30) Priority: 25.10.2021 KR 20210142703; 24.12.2021 KR 20210187738
(71) Applicant: Samsung Electronics Co., Ltd., Suwon-si, Gyeonggi-do 16677 (KR)
(72) Inventor: AN, Hyosang, Suwon-si Gyeonggi-do 16677 (KR); BYON, Kwangseok, Suwon-si Gyeonggi-do 16677 (KR); KIM, Bongchan, Suwon-si Gyeonggi-do 16677 (KR); RHO, Hyungjin, Suwon-si Gyeonggi-do 16677 (KR); PARK, Jaeheung, Suwon-si Gyeonggi-do 16677 (KR); WON, Jonghoon, Suwon-si Gyeonggi-do 16677 (KR)
(74) Representative: HGF
(86) International application number: PCT/KR2022/013086
(87) International publication number: WO 2023/075117

(57) **Abstract**

A camera module according to an embodiment may include a lens assembly aligned along an optical axis, an auto focus (AF) carrier for moving along the optical axis together with the lens assembly, and a housing for accommodating the AF carrier, a yoke may be fixed to a first outer surface of side surfaces of the AF carrier, the yoke may include a first portion having a first length in the optical axis direction and two protrusions which protrude toward the housing from both ends of a first portion, a first magnetic body, a magnet and a second magnetic body may be fixed in order in a direction parallel to the optical axis in a first inner surface facing the first outer surface of the AF carrier among the side surfaces of the housing, the magnet may have a first pole on a surface contacting the first magnetic body, and a second pole opposite to the first pole on a surface contacting the second magnetic body, and a second protrusion may face the second magnetic body while a first protrusion of the two protrusions of the yoke faces the first magnetic body. Besides, various embodiments obtained from the specification are possible.

## Description

### [Technical Field]

Various embodiments disclosed in this document relate to a camera module for performing an auto focus function (e.g., auto focus (AF)) and an electronic device including the camera module.

### [Background Art]

As an electronic device including a camera is spread and users' demand for acquiring a high-quality image using the camera increases, camera related technologies are developing.

Regarding image quality improvement, a camera including a structure for performing the AF to focus on a subject is suggested. For example, the electronic device may perform the AF by designing a camera structure based on a fixed coil and movable magnets.

### [Disclosure of Invention]

### [Technical Problem]

Meanwhile, in a camera structure of a conventional mobile device, a magnet for driving may be disposed in a driving portion and a yoke may be secured in a fixing portion. According to the related art, since a return force is generated only at one point to give a fixing effect, it may be vulnerable to impact and noise caused by an external force. In addition, since the structure, which arranges the magnet in the driving portion, may make the driving portion heavy, and as a lens becomes larger and heavier, a higher driving force is required and accordingly the magnet must also increase, which makes the driving portion even heavier.

### [Solution to Problem]

A camera module in an embodiment may include a lens assembly aligned along an optical axis, an auto focus (AF) carrier for moving along the optical axis together with the lens assembly, and a housing for accommodating the AF carrier, a yoke may be fixed to a first outer surface of side surfaces of the AF carrier, the yoke may include a first portion having a first length in the optical axis direction and two protrusions which protrude toward the housing from both ends of a first portion, a first magnetic body, a magnet and a second magnetic body may be fixed in order in a direction parallel to the optical axis in a first inner surface facing the first outer surface of the AF carrier among the side surfaces of the housing, the magnet may have a first pole on a surface contacting the first magnetic body, and a second pole opposite to the first pole on a surface contacting the second magnetic body, and a second protrusion may face the second magnetic body while a first protrusion of the two protrusions of the yoke faces the first magnetic body.

An electronic device in an embodiment may include at least one processor, and a camera module connected to the at least one processor, the camera module may include a lens assembly aligned along an optical axis, an image sensor for acquiring light passing through the lens assembly, an AF carrier for moving along the optical axis together with the lens assembly, the AF carrier including a yoke disposed on a first outer surface of side surfaces of the AF carrier, and a housing for accommodating the AF carrier, the housing may include a first magnetic body fixed to a first inner surface facing the first outer surface of the AF carrier among the side surfaces of the housing, a second magnetic body, and a magnet disposed between the first magnetic body and the second magnetic body, a first coil spaced apart from the magnet by a first distance in a first direction parallel to the optical axis and disposed parallel to the first inner surface, and a second coil spaced apart from the magnet by the first distance in a second direction opposite to the first direction and disposed parallel to the first inner surface, the magnet may have a first pole on a surface contacting the first magnetic body, and a second pole opposite to the first pole on a surface contacting the second magnetic body, the yoke may include a first portion having a first length in the optical axis direction and two protrusions which protrude toward the housing from both ends of a first portion, while a first protrusion of the two protrusions of the yoke faces the first magnetic body, a second protrusion may face the second magnetic body, and the at least one processor may control an electric current applied to the first coil or the second coil, based on information acquired through the image sensor, and move the AF carrier along the optical axis by controlling the electric current applied to the first coil or the second coil.

### [Advantageous Effects of Invention]

According to various embodiments disclosed herein, shaking of a driving portion due to external impact may be reduced by moving the driving portion using an electromagnetic force and concurrently fixing it at three points using a magnetic force.

According to various embodiments disclosed herein, a weight may be reduced by fixing a yoke without arranging a magnet in the driving portion.

According to various embodiments disclosed herein, since the driving portion includes no magnet and is subject to less magnetic field interference, it may be easy to arrange other camera in vicinity.

Besides, various effects obtained directly or indirectly from this document may be provided.

### [Brief Description of Drawings]

FIG. 1 is a block diagram of an electronic device in a network environment according to various embodiments.
FIG. 2 is a block diagram illustrating a camera module, according to an embodiment.
FIG. 3A is a perspective view of a fixing portion including a magnet, a magnetic body and a coil included in a camera module according to an embodiment.
FIG. 3B is a cross-sectional view of a fixing portion including a magnet, a magnetic body and a coil included in a camera module according to an embodiment.
FIG. 4A is a perspective view of a yoke included in a camera module according to an embodiment.
FIG. 4B is a cross-sectional view of a yoke included in a camera module according to an embodiment.
FIG. 5A illustrates that a yoke is fixed to a specific position by a magnetic force between a fixing portion and the yoke in a camera module according to an embodiment.
FIG. 5B illustrates, when viewed from a side, that a driving portion is fixed to a specific position by a magnetic force between a fixing portion and a yoke in a camera module according to an embodiment.
FIG. 6 is a diagram illustrating a driving portion with a yoke disposed and a housing with a fixing portion disposed in an electronic device according to an embodiment.
FIG. 7 is a graph illustrating a relationship between a force exerting on a driving portion and a moving distance of the driving portion in a camera module according to an embodiment.
FIG. 8 is a diagram illustrating that a yoke is fixed to a specific position to face a fixing portion in a camera module according to various embodiments.
FIG. 9A is a diagram illustrating that a driving portion moves in a first direction in case that an electric current is applied to a first coil in a camera module according to an embodiment.
FIG. 9B is a diagram illustrating that a driving portion moves in a second direction in case that an electric current is applied to a second coil in a camera module according to an embodiment.
FIG. 10 is a diagram illustrating an electromagnetic force or a magnetic force generating in a camera module according to various embodiments.
FIG. 11 is a flowchart for moving an auto focus (AF) carrier in an electronic device according to an embodiment.

In relation to description of the drawings, like or similar reference numerals may be used for like or similar components.

### [Best Mode for Carrying out the Invention]

Hereinafter, various embodiments of the disclosure are disclosed with reference to the attached drawings. However, it should be understood that it is not intended to limit the present invention to specific embodiments, but to embrace various modifications, equivalents, and/or alternatives of the embodiments of the present invention.

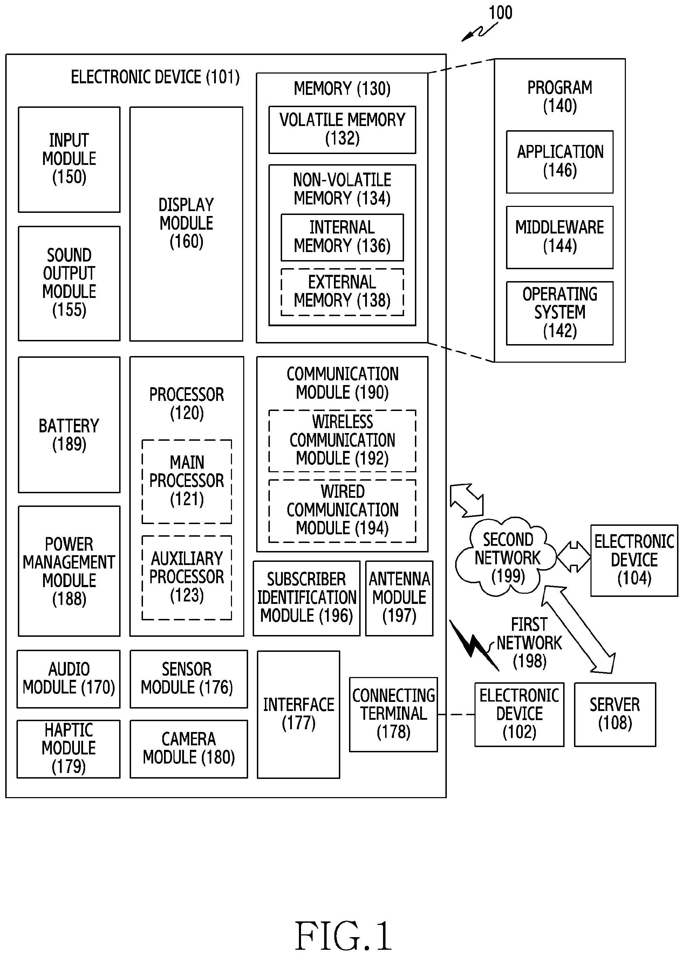

FIG. 1 is a block diagram of an electronic device 101 in a network environment 100 according to an embodiment.

Referring to FIG. 1, the electronic device 101 in the network environment 100 may communicate with an electronic device 102 over a first network 198 (e.g., a short-range wireless communication network), or may communicate with at least one of an electronic device 104 or a server 108 over a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, an audio output module 155, a display module 160, an audio module 170, a sensor module 176, an interface 177, a connection terminal 178, a haptic module 179, a camera module 180, a power management module 188, a battery 189, a communication module 190, a subscriber identification module 196, or an antenna module 197. In some embodiments, at least one (e.g., the connection terminal 178) of the components may be omitted, or one or more other components may be added in the electronic device 101. In some embodiments, some (e.g., the sensor module 176, the camera module 180, or the antenna module 197) of the components may be integrated as a single component (e.g., the display module 160).

The processor 120 may, for example, execute software (e.g., a program 140) to thus control at least one other component (e.g., a hardware or software component) of the electronic device 101 coupled to the processor 120, and perform various data processing or computations. According to an embodiment, as at least a part of the data processing or computation, the processor 120 may store a command or data received from other component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing device or an application processor) or an auxiliary processor 123 (e.g., a graphics processing device, a neural processing portion (NPU), an image signal processor, a sensor hub processor, or a communication processor) for operating independently from or in conjunction with it. For example, in case that the electronic device 101 includes the main processor 121 and the auxiliary processor 123, the auxiliary processor 123 may be configured to use less power than the main processor 121, or to be specific for a designated function. The auxiliary processor 123 may be implemented as separately from, or as a part of the main processor 121.

The auxiliary processor 123 may control at least some of functions or states related to at least one component (e.g., the display module 160, the sensor module 176, or the communication module 190) of the components of the electronic device 101, for example, instead of the main processor 121 while the main processor 121 is in an inactive (e.g., sleeping) state, or together with the main processor 121 while the main processor 121 is in an active state (e.g., executing an application). According to an embodiment, the auxiliary processor 123 (e.g., an image signaling processor or a communication processor) may be implemented as a part of other component (e.g., the camera module 180 or the communication module 190) functionally related. According to an embodiment, the auxiliary processor 123 (e.g., the NPU) may include a hardware structure specified for artificial intelligence model processing. An artificial intelligence model may be generated through machine learning. Such learning may be performed, for example, by the electronic device 101 where the artificial intelligence is conducted, or via a separate server (e.g., the server 108). A learning algorithm may include, but not limited to, for example, supervised learning, unsupervised learning, semi-supervised learning or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks or a combination of two or more of them, but is not limited thereto. The artificial intelligence model may, additionally or alternatively, include a software structure, in addition to the hardware structure.

The memory 130 may store various data used by at least one component (e.g., the processor 120 or the sensor module 176) of the electronic device 101. The data may include, for example, software (e.g., the program 140), and input data or output data for a command related thereto. The memory 130 may include the volatile memory 132 or the non-volatile memory 134.

The program 140 may be stored as software in the memory 130, and may include, for example, an operating system 142, middleware 144 or an application 146.

The input module 150 may receive a command or data to be used by the component (e.g., the processor 120) of the electronic device 101 from outside (e.g., a user) of the electronic device 101. The input module 150 may include, for example, a microphone, a mouse, a keyboard, a key (e.g., a button), or a digital pen (e.g., a stylus pen).

The audio output module 155 may output a sound signal to the outside of the electronic device 101. The audio output module 155 may include, for example, a speaker or a receiver. The speaker may be used for a general use such as multimedia playing or record playing. The receiver may be used to receive an incoming call. According to an embodiment, the receiver may be implemented separately from, or as a part of the speaker.

The display module 160 may visually provide information to the outside (e.g., the user) of the electronic device 101. The display module 160 may include, for example, a display, a hologram device, or a projector and control circuitry for controlling a corresponding device. According to an embodiment, the display module 160 may include a touch sensor configured to detect a touch, or a pressure sensor configured to measure an intensity of a force generated by the touch.

The audio module 170 may convert a sound into an electrical signal, or convert an electrical signal into a sound. According to an embodiment, the audio module 170 may obtain the sound via the input module 150, or output the sound via the audio output module 155, or an external electronic device (e.g., the electronic device 102) (e.g., a speaker or a headphone) directly or wirelessly connected with the electronic device 101.

The sensor module 176 may detect an operation state (e.g., a power or a temperature) of the electronic device 101, or an external environment state (e.g., a user state), and generate an electrical signal or a data value corresponding to the detected state. According to an embodiment, the sensor module 176 may include, for example, a gesture sensor, a gyro sensor, a barometric sensor, a magnetic sensor, an acceleration sensor, a grip sensor, a proximity sensor, a color sensor, an infrared (IR) sensor, a biosensor, a temperature sensor, a humidity sensor, or an illuminance sensor.

The interface 177 may support one or more designated protocols to be used for the electronic device 101 to connect with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector for physically connecting the electronic device 101 with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a motion) or an electrical stimulus to be recognized by the user through tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least a part of, for example, a power management integrated circuit (PMIC).

The battery 189 may supply the power to at least one component of the electronic device 101. According to an embodiment, the battery 189 may include, for example, a primary cell which is not rechargeable, a secondary cell which is rechargeable or a fuel cell.

The communication module 190 may support establishment of a direct (e.g., wired) communication channel or a wireless communication channel between the electronic device 101 and the external electronic device (e.g., the electronic device 102, the electronic device 104, or the server 108), and communication over the established communication channel. The communication module 190 may include one or more communication processors which are operated independently from the processor 120 (e.g., the application processor), and supports the direct (e.g., wired) communication or the wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local region network (LAN) communication module, or a power line communication module). A corresponding communication module of these communication modules may communicate with the external electronic device 104 via the first network 198 (e.g., a short-range communication network such as Bluetooth, wireless-fidelity (Wi-Fi) direct, or infrared data association (IrDA)) or the second network 199 (e.g., a long-range communication network such as a legacy cellular network, a 5th (5G) network, a next-generation communication network, Internet, or a computer network (e.g., a LAN or a wide area network (WAN)). These various communication modules may be integrated as a single component (e.g., a single chip), or may be implemented as a plurality of separate components (e.g., multiple chips). The wireless communication module 192 may identify and authenticate the electronic device 101 in the communication network such as the first network 198 or the second network 199 using subscriber information (e.g., international mobile subscriber identity (IMSI)) stored in the subscriber identification module 196.

The wireless communication module 192 may support a 5G network after a 4G network and a next-generation communication technology, for example, a new radio (NR) access technology. The NR access technology may support high-speed transmission of high-capacity data (enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support, for example, a high-frequency band (e.g., millimeter waves (mmWave) band), to achieve a high data transmission rate. The wireless communication module 192 may support various technologies for securing performance in the high-frequency band, for example, techniques such as beamforming, massive multiple-input and multiple-output (MIMO), full dimensional (FD)-MIMO, an array antenna, analog beamforming, or a large scale antenna. The wireless communication module 192 may support various requirements specified in the electronic device 101, the external electronic device (e.g., the electronic device 104), or a network system (e.g., the second network 199). According to an embodiment, the wireless communication module 192 may support a peak data rate (e.g., 20 Gbps or more) for realizing the eMBB, loss coverage (e.g., 164 dB or less) for realizing the mMTC, or U-plane latency (e.g., 0.5 ms or less for each of downlink (DL) and uplink (UL), or 1 ms or less for round trip) for realizing the URLLC.

The antenna module 197 may transmit or receive a signal or the power to or from the outside (e.g., the external electronic device). According to an embodiment, the antenna module 197 may include an antenna including a radiator formed of a conductor or a conductive pattern formed on a substrate (e.g., a printed circuit board (PCB)). According to an embodiment, the antenna module 197 may include a plurality of antennas (e.g., array antennas). In this case, at least one antenna appropriate for a communication scheme used in the communication network such as the first network 198 or the second network 199 may be selected, for example, by the communication module 190 from the plurality of the antennas. The signal or the power may be transmitted or received between the communication module 190 and the external electronic device via the at least one antenna selected. According to some embodiment, other component (e.g., a radio frequency integrated circuit (RFIC)) than the radiator may be additionally formed as a part of the antenna module 197.

According to various embodiments, the antenna module 197 may form an mmWave antenna module. According to an embodiment, the mmWave antenna module may include a PCB, an RFIC disposed on or adjacent to a first surface (e.g., a bottom surface) of the PCB and supporting a designated high frequency band (e.g., the mmWave band), and a plurality of antennas (e.g., array antennas) disposed on or adjacent to a second surface (e.g., a top surface or a side surface) of the PCB and transmitting or receiving signals of the designated high frequency band.

At least some of the components may be connected to each other through an interperipheral communication scheme (e.g., a bus, general purpose input and output (GPIO), serial peripheral interface (SPI), or mobile industry processor interface (MIPI)) and exchange signals (e.g., commands or data) therebetween.

According to an embodiment, a command or data may be transmitted or received between the electronic device 101 and the external electronic device 104 via the server 108 connected to the second network 199. The external electronic device 102 or 104 may be a device of the same or different type as or from the electronic device 101. According to an embodiment, all or some of operations executed at the electronic device 101 may be carried out at one or more of the external electronic devices 102, 104, or 108. For example, in case that the electronic device 101 needs to perform a function or a service automatically, or in response to a request from the user or other device, the electronic device 101 may request one or more external electronic devices to perform at least a part of the function or the service, instead of or in addition to executing the function or the service. The one or more external electronic devices receiving the request may perform at least a part of the function or the service requested, or an additional function or service related to the request, and provide a result of the execution to the electronic device 101. The electronic device 101 may provide the result as at least a part of a response to the request, without or with further processing of the result. For doing so, for example, cloud computing, distributed computing, mobile edge computing (MEC), or client-server computing technology may be used. The electronic device 101 may provide an ultra-low delay service using, for example, the distributed computing or the MEC. In another embodiment, the external electronic device 104 may include an Internet of things (IoT) device. The server 108 may be an intelligent server using the machine learning and/or a neural network. According to an embodiment, the external electronic device 104 or the server 108 may be included in the second network 199. The electronic device 101 may be applied to an intelligent service (e.g., smart home, smart city, smart car, or healthcare) based on a 5G communication technology and an IoT-related technology.

The electronic device according to various embodiments disclosed in the disclosure may be a device of various types. The electronic device may include, for example, a portable communication device (e.g., a smart phone), a computer device, a portable multimedia device, a portable medical device, a camera, a wearable device, or a home appliance. The electronic device according to an embodiment of the disclosure is not limited to the devices described above.

It should be appreciated that various embodiments of the disclosure and the terms used therein are not intended to limit technological features disclosed in this document to particular embodiments, and embrace various modifications, equivalents, or alternatives of a corresponding embodiment. With respect to the descriptions of the drawings, similar reference numerals may be used for similar or related elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include one, or all possible combinations of the items enumerated together in a corresponding one of the phrases. Such terms as "1st" and "2nd," or "first" and "second" may be used to simply distinguish a corresponding component from another, and do not limit the corresponding components in other aspect (e.g., importance or order). In case that an element (e.g., a first element) is referred to, with or without the term "operatively" or "communicatively", as "coupled" or "connected" to another element (e.g., a second element), it means that the element may be coupled with the other element directly (e.g., wiredly), wirelessly, or via a third element.

The term "module" used in various embodiments of the disclosure may include a unit implemented in hardware, software or firmware, and may be interchangeably used with a term, for example, logic, a logic block, a part, or circuitry. The module may be a single integral component, or a minimum unit or part thereof, for performing one or more functions. For example, according to an embodiment, the module may be implemented in a form of an application-specific integrated circuit (ASIC).

Various embodiments of the disclosure may be implemented as software (e.g., the program 140) including one or more instructions which are stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored in the storage medium, and execute it or them. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, 'non-transitory' simply means that the storage medium is a tangible device, and does not include a signal (e.g., an electromagnetic wave), but this term does not differentiate between a case where data is semi-permanently stored in the storage medium and a case where the data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or may be distributed (e.g., downloaded or uploaded) directly or online via an application store (e.g., Play Store^{™}) or between two user devices (e.g., smart phones). In the online distribution, at least a part of the computer program product may be temporarily stored in the machine-readable storage medium such as a memory of a manufacturer's server, an application store server, or a relay server, or may be temporarily generated.

According to various embodiments, each component (e.g., a module or a program) of the above-described components may include a single entity or multiple entities, and some of the multiple entities may be separately deployed in different components. According to various embodiments, one or more components or operations of the above-described components may be omitted, or one or more other components or operations may be added. Alternatively or additionally, a plurality of components (e.g., modules or programs) may be integrated as a single component. In this case, the integrated component may perform one or more functions of each component of the plurality of the components in the same or similar manner as they are performed by a corresponding component of the plurality of the components before the integration. According to various embodiments, operations performed by the module, the program or other component may be carried out sequentially, in parallel, repeatedly, or heuristically, one or more of the operations may be executed in a different order or omitted, or one or more other operations may be added.

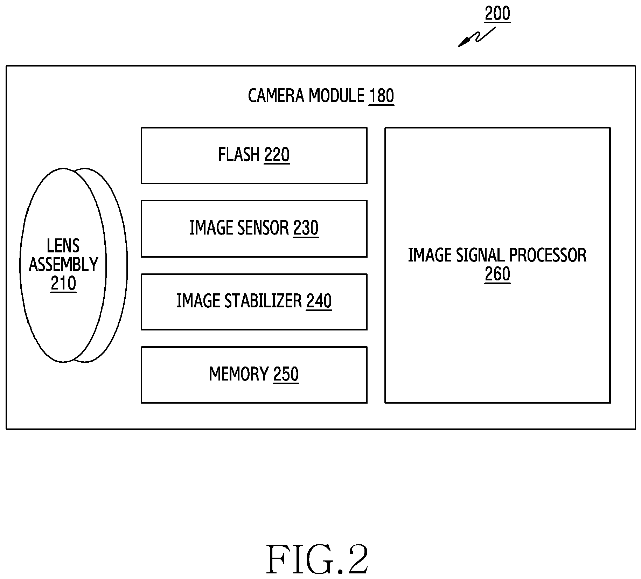

FIG. 2 is a block diagram 200 illustrating a camera module 180, according to various embodiments. Referring to FIG. 2, the camera module 180 may include a lens assembly 210, a flash 220, an image sensor 230, an image stabilizer 240, a memory 250 (e.g., a buffer memory), or an image signal processor 260. The lens assembly 210 may collect light emitted from a subject to be captured for an image. The lens assembly 210 may include one or more lenses. According to an embodiment, the camera module 180 may include a plurality of lens assemblies 210. In this case, the camera module 180 may form, for example, a dual camera, a 360-degree camera, or a spherical camera. Some of the plurality of the lens assemblies 210 may have the same lens properties (e.g., an angle of view, a focal length, autofocus, an f number, or optical zoom), or at least one lens assembly may have one or more lens properties different from the lens properties of the other lens assemblies. The lens assembly 210 may include, for example, a wide-angle lens or a telephoto lens.

The flash 220 may emit light used to enhance the light emitted or reflected from the subject. According to an embodiment, the flash 220 may include one or more light emitting diodes (e.g., a red-green-blue (RGB) LED, a white LED, an infrared LED, or an ultraviolet LED), or a xenon lamp. The image sensor 230 may convert the light emitted or reflected from the subject and transmitted through the lens assembly 210 into an electrical signal, and thus acquire an image corresponding to the subject. According to an embodiment, the image sensor 230 may include one image sensor selected from image sensors having different properties, for example, an RGB sensor, a black and white (BW) sensor, an IR sensor, or an ultraviolet (UV) sensor, a plurality of image sensors having the same properties, or a plurality of image sensors having different properties. The image sensors included in the image sensor 230 each may be implemented using, for example, a charged coupled device (CCD) sensor or a complementary metal oxide semiconductor (CMOS) sensor.

The image stabilizer 240 may, in response to a movement of the camera module 180 or the electronic 200 including the same, move at least one lens or image sensor 230 included in the lens assembly in a specific direction or control an operational attribute of the image sensor 230 (e.g., adjust a read-out timing). This allows to compensate for at least a part of a negative effect by the movement on the captured image. According to an embodiment, the image stabilizer 240 may detect such a movement of the camera module 180 or the electronic device 101 using a gyro sensor (not shown) or an acceleration sensor (not shown) disposed inside or outside the camera module 180, according to an embodiment. According to an embodiment, the image stabilizer 240 may be implemented with, for example, an optical image stabilizer. The memory 250 may at least temporarily store at least a part of the image obtained through the image sensor 230 for a subsequent image processing task. For example, in case that the image acquisition is delayed due to shutter lag or multiple images are captured quickly, a raw image acquired (e.g., a Bayer-patterned image or a high-resolution image) may be stored in the memory, and its corresponding copy image (e.g., a low-resolution image) may be previewed through a display device (e.g., the display module 160). Next, in case that a designated condition is satisfied (e.g., a user input or a system command), at least a part of the raw image stored in the memory 250 may be obtained and processed, for example, by the image signal processor 260. According to an embodiment, the memory 250 may be configured as at least a part of the memory 250, or as a separate memory operated independently.

The image signal processor 260 may perform one or more image processing on an image obtained through the image sensor 230 or an image stored in the memory 250. The one or more image processing may include, for example, depth map generation, 3D modeling, panorama generation, feature point extraction, image synthesizing, or image compensation (e.g., noise reduction, resolution adjustment, brightness adjustment, blurring, sharpening, or softening). Additionally or alternatively, the image signal processor 260 may control (e.g., control exposure time, or control read-out timing) at least one (e.g., the image sensor 230) of the components included in the camera module 180. The image processed by the image signal processor 260 may be stored back in the memory 250 for further processing, or may be provided to an external component (e.g., the memory 130, the display device (e.g., the display module 160), the electronic device 102, the electronic device 104, or the server 108) of the camera module 180. According to an embodiment, the image signal processor 260 may be configured as at least a part of the processor 120, or as a separate processor operated independently from the processor 120. In case that the image signal processor 260 is configured as the separate processor from the processor 120, at least one image processed by the image signal processor 260 may be displayed on the display device (e.g., the display module 160) as it is or after further image processing by the processor 120.

According to an embodiment, the electronic device 101 may include a plurality of camera modules 180 each having different properties or capabilities. In this case, for example, at least one of the plurality of the camera modules 180 may be a wide-angle camera, and at least another one may be a telephoto camera. Similarly, at least one of the plurality of the camera modules 180 may be a front camera, and at least another one may be a rear camera.

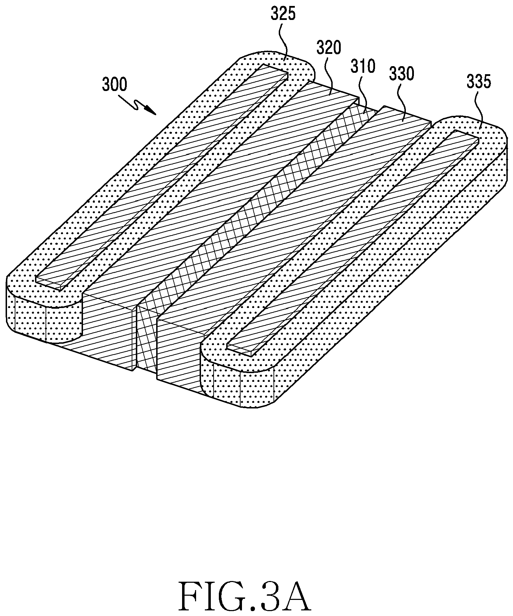

FIG. 3A is a perspective view of a fixing portion 300 including a magnet, a magnetic body, and a coil included in a camera module (e.g., the camera module 180 of FIG. 1 and FIG. 2) according to an embodiment.

Referring to FIG. 3A, the fixing portion 300 of the camera module 180 according to an embodiment may include a magnet 310, a first magnetic body 320, a second magnetic body 330, a first coil 325 and a second coil 335. In various embodiments, the fixing portion 300 of the camera module 180 may include an additional component in addition to the components shown in FIG. 3A, or may omit at least one of the components shown in FIG. 3A.

According to an embodiment, the first magnetic body 320, the magnet 310 and the second magnetic body 330 may be disposed side by side in a direction parallel to an optical axis in the camera module 180. For example, the magnet 310 may be disposed between the first magnetic body 320 and the second magnetic body 330. Also, for example, the magnet 310 may be adjacent to the first magnetic body 320 in a first direction parallel to the optical axis, and may be adjacent to the second magnetic body 330 in a second direction opposite to the first direction.

According to an embodiment, the magnet 310 may have a first pole on a surface contacting the first magnetic body 320 and a second pole which is opposite to the first pole on a surface contacting the second magnetic body 330. For example, the magnet 310 may have an N pole on a surface contacting the first magnetic body 320 and an S pole on a surface contacting the second magnetic body 330. As another example, the magnet 310 may have an S pole on a surface contacting the first magnetic body 320 and an N pole on a surface contacting the second magnetic body 330.

According to an embodiment, the first magnetic body 320 and/or the second magnetic body 330 may be formed of iron. According to an embodiment, the first magnetic body 320 and/or the second magnetic body 330 may include a projection shape. For example, the first magnetic body 320 and/or the second magnetic body 330 may include the projection shape which protrudes in a direction substantially perpendicular to the optical axis. In this document, the projection shape formed on the first magnetic body 320 and/or the second magnetic body 330 may be referred to as a protrusion of the first magnetic body 320 and/or a protrusion of the second magnetic body 330.

According to an embodiment, the first coil 325 and/or the second coil 335 may be winding coils. According to an embodiment, the first coil 325 may be spaced apart from the magnet 310 by a first distance in a first direction parallel to the optical axis. According to an embodiment, the first coil 325 may be spaced apart from the magnet 310 by the first distance in the first direction parallel to the optical axis and coupled to an end of the first magnetic body 320. For example, the first coil 325 may be disposed by winding around the projection of the first magnetic body 320 (or, the protrusion of the first magnetic body 320).

According to an embodiment, the second coil 335 may be spaced apart from the magnet 310 by the first distance in a second direction parallel to the optical axis. For example, the second coil 335 may be spaced apart from the magnet 310 by the first distance in the second direction parallel to the optical axis and coupled to an end of the second magnetic body 330. For example, the second coil 335 may be disposed by winding around the projection of the second magnetic body 330 (or, the protrusion of the second magnetic body 330).

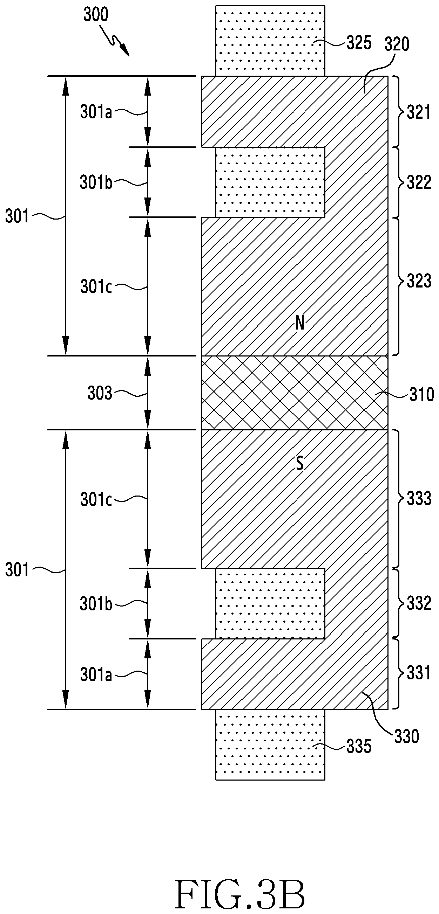

FIG. 3B is a cross-sectional view of the fixing portion including the magnet, the magnetic body, and the coil included in the camera module (e.g., the camera module 180 of FIG. 1 and FIG. 2) according to an embodiment.

Referring to FIG. 3B, in an embodiment, the first magnetic body 320, the magnet 310, and the second magnetic body 330 may be sequentially disposed in the direction parallel to the optical axis. For example, the magnet 310 may be disposed between the first magnetic body 320 and the second magnetic body 330. According to an embodiment, the first coil 325 may be wound around the end (or, the projection, the protrusion) of the first magnetic body 320, and the second coil 335 may be wound around the end (or, the projection, the protrusion) of the second magnetic body 330.

According to an embodiment, a groove of a specific width may be formed in the first magnetic body 320 to wind the first coil 325 as shown in FIG. 3B.

According to an embodiment, the first magnetic body 320 may include a first portion 321 around which the first coil 325 is wound, a second portion 322 corresponding to a lower end of the groove formed in the first magnetic body 320 and extending from a part of the first portion 321 in the optical axis direction, and a third portion 323 connected to the second portion 322 and adjoining the magnet 310. For example, the first portion 321 may be a protrudin which protrudes in a direction perpendicular to the optical axis. The protrusion may be referred to as a protrusion of the first portion 321 of the first magnetic body 320.

According to an embodiment, the length of the first portion 321 in the optical axis direction may be a first length 301a, the length of the second portion 322 in the optical axis direction may be a second length 301b, and the length of the third portion 323 in the optical axis direction may be a third length 301c. According to an embodiment, a total length 301 of the first magnetic body 320 in the optical axis direction may be the sum of the first length 301a, the second length 301b and the third length 301c.

Also, according to an embodiment, a groove of a specific width may be formed in the second magnetic body 330 to wind the second coil 335 as shown in FIG. 3B. According to an embodiment, the second magnetic body 330 may be in a structure symmetrical to the first magnetic body 320 based on the magnet 310.

According to an embodiment, the second magnetic body 330 may include a first portion 331 around which the second coil 335 is wound, a second portion 332 corresponding to a lower end of the groove formed in the second magnetic body 330 and extending from a part of the first portion 331 in the optical axis direction, and a third portion 333 connected to the second portion 332 and adjoining the magnet 310. For example, the first portion 331 may be a protrusion which protrudes in a direction perpendicular to the optical axis. The protrusion may be referred to as a protrusion of the first portion 331 of the second magnetic body 330.

According to an embodiment, the length of the first portion 331 of the second magnetic body 330 in the optical axis direction may be a first length 301a, the length of the second portion 332 of the second magnetic body 330 in the optical axis direction may be a second length 301b, and the length of the third portion 333 of the second magnetic body 330 in the optical axis direction may be a third length 301c. That is, the lengths of the first portion 331 through the third portion 333 of the first magnetic body 320 in the optical axis direction and the lengths of the first portion 321 through the third portion 323 of the second magnetic body 330 may be the same. According to an embodiment, a total length 301 of the second magnetic body 330 in the optical axis direction may be the sum of the first length 301a, the second length 301b and the third length 301c.

According to an embodiment, the first length 301a and the second length 301b may be identical or different. According to an embodiment, the first length 301a, the second length 301b and the third length 301c may have the length in various combinations. For example, the first length 301a, the second length 301b and the third length 301c may be configured based on a required magnetic force.

According to an embodiment, the magnet 310 may have a fourth length 303 in the optical axis direction. According to an embodiment, the magnet 310 may be adjacent to the first magnetic body 320 at one end and adjacent to the second magnetic body 330 at the other end in the direction parallel to the optical axis.

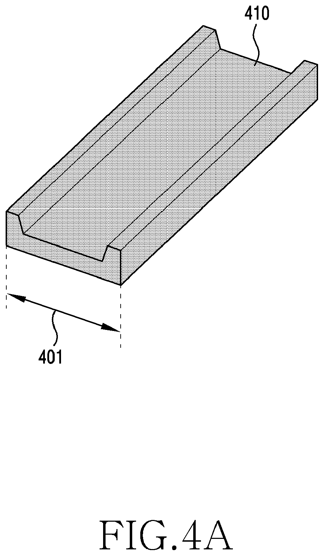

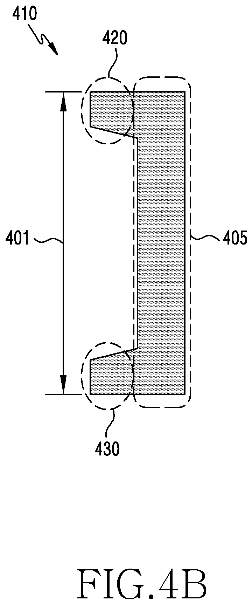

FIG. 4A is a perspective view of a yoke included in a camera module (e.g., the camera module 180 of FIG. 1 and FIG. 2) according to an embodiment. FIG. 4B is a cross-sectional view of the yoke included in the camera module (e.g., the camera module 180 of FIG. 1 and FIG. 2) according to an embodiment.

Referring to FIG. 4A and FIG. 4B, a yoke 410 according to an embodiment may include a first portion 405 having a first length 401 in the optical axis direction and two protrusions which protrude toward the housing at both ends of the first portion 405. For example, the yoke 410 may include a first protrusion 420 protruding toward the housing from one end of the first portion 405 and a second protrusion 430 protruding toward the housing from the other end of the first portion 405.

According to an embodiment, a total length (e.g., a first length 401) of the yoke 410 may be longer than a sum of a total length 301 of a first magnetic body (e.g., the first magnetic body 320 of FIG. 3A and FIG. 3B) or a second magnetic body (e.g., the second magnetic body 330 of FIG. 3A and FIG. 3B) and a length of a magnet (e.g., the magnet 310 of FIG. 3A and FIG. 3B) and shorter than a sum of the lengths of the first magnetic body 320, the magnet 310 and the second magnetic body 330. According to an embodiment, the total length (e.g., the first length 401) of the yoke 410 may vary depending on the lengths of the first magnetic body 320, the magnet 310 and the second magnetic body 330.

According to an embodiment, in case that the yoke 410 faces a fixing portion (e.g., the fixing portion 300 of FIG. 3A and FIG. 3B), the second protrusion 430 may face the second magnetic body 330 while the first protrusion 420 faces the first magnetic body 320.

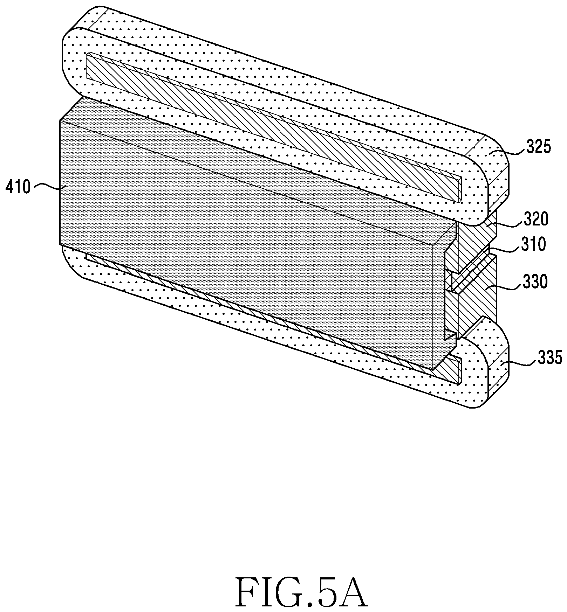

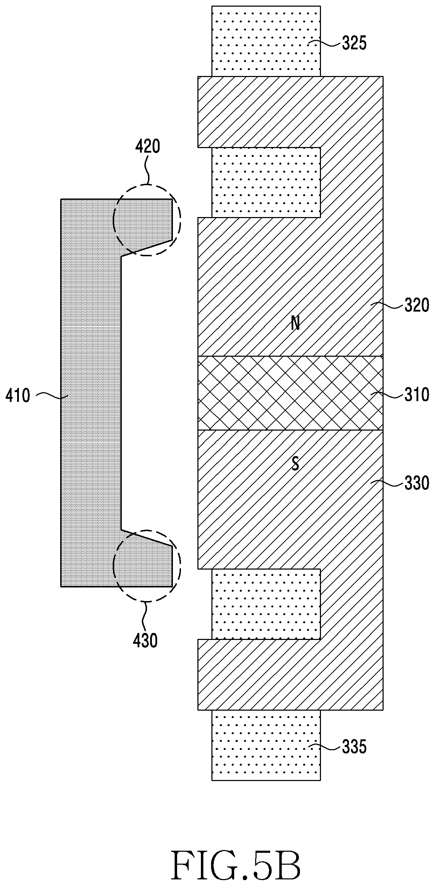

FIG. 5A illustrates that a yoke is fixed to a specific position by a magnetic force between a fixing portion and the yoke in a camera module (e.g., the camera module 180 of FIG. 1 and FIG. 2) according to an embodiment. FIG. 5B illustrates that a driving portion is fixed to a specific position by the magnetic force between the fixing portion 300 and the yoke 410 in the camera module (e.g., the camera module 180 of FIG. 1 and FIG. 2) according to an embodiment.

Referring to FIG. 5A and FIG. 5B, the yoke 410 may be spaced apart from and facing the fixing portion (e.g., the fixing portion 300 of FIG. 3A and FIG. 3B) by a specific interval. According to an embodiment, the fixing portion 300 may include a magnet 310, a first magnetic body 320, a second magnetic body 330, a first coil 325 and a second coil 335.

According to an embodiment, the yoke 410 may be spaced apart from and facing the fixing portion 300 by a specific interval due to the magnetic force generated at the magnet 310, the first magnetic body 320 and the second magnetic body 330 of the fixing portion 300. Specifically, the yoke 410 may be spaced part from and face the fixing portion 300 at a specific position by a specific interval in a direction perpendicular to the optical axis.

As shown in FIG. 5B, a first protrusion 420 and a second protrusion 430 of the yoke 410 may protrude toward the fixing portion 300. According to an embodiment, in case that the yoke 410 is spaced apart from and faces the fixing portion 300 at the specific position by the specific interval in the direction perpendicular to the optical axis, the first protrusion 420 and the second protrusion 430 may face the magnetic bodies having different polarities. For example, in case that the yoke 410 is spaced apart from and faces the fixing portion 300 at the specific position by a specific distance in the direction perpendicular to the optical axis, the second protrusion 430 may face the second magnetic body 330 while the first protrusion 420 faces the first magnetic body 320.

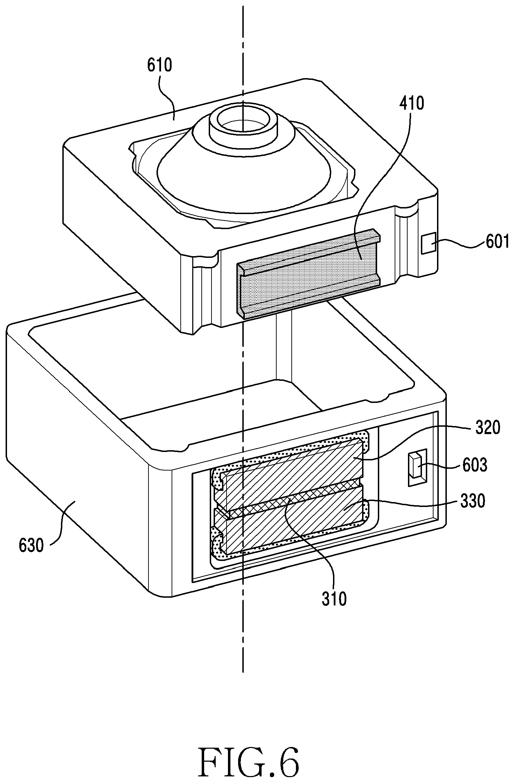

FIG. 6 is a view illustrating a driving portion with a yoke disposed and a housing with a fixing portion disposed in a camera module (e.g., the camera module 180 of FIG. 1 and FIG. 2) according to an embodiment.

Referring to FIG. 6, the camera module (e.g., the camera module 180 of FIG. 1 and FIG. 2) according to an embodiment may include a lens assembly 210 (e.g., the lens assembly 210 of FIG. 2) aligned along the optical axis, an AF carrier 610 for moving along the optical axis, and a housing 630 for accommodating the AF carrier. In various embodiments, the camera module 180 may include an additional component in addition to the components shown in FIG. 6, or may omit at least one of the components shown in FIG. 6.

According to an embodiment, a yoke 410 may be disposed on the AF carrier 610 in the camera module 180. For example, the yoke 410 may be fixed to a first outer surface of side surfaces of the AF carrier 610. According to an embodiment, the yoke 410 may include a first portion 405 having a first length (e.g., the first length 401 of FIG. 4A, FIG. 4B) in the optical axis direction, and two protrusions (e.g., a first protrusion 420, a second protrusion 430) which protrude toward the housing 630 from both ends of the first portion 405.

According to an embodiment, a fixing portion (e.g., the fixing portion 300 of FIG. 3A and FIG. 3B) of the camera module 180 may be disposed on the housing 630. For example, the fixing portion 300 may be fixed to a first inner surface facing the first outer surface of the AF carrier 610 among side surfaces of the housing 630.

According to an embodiment, the yoke 410 may move along a straight line in the optical axis direction as an electric current is applied to a first coil (e.g., the first coil 325 of FIG. 3A and FIG. 3B) or a second coil (e.g., the second coil 335 of FIG. 3A and FIG. 3B), and may be fixed at a specific position in case that the electric current is cut.

According to an embodiment, a hall sensor 603 may be disposed in the housing 630, and a hall magnet 601 may be disposed in the AF carrier 610. According to an embodiment, the camera module 180 may measure a position of the lens assembly 210 using the hall sensor 603 and the hall magnet 601. According to an embodiment, the camera module 180 may measure (or identify) the position of the lens assembly 210 on the optical axis using the hall sensor 603 and the hall magnet 601.

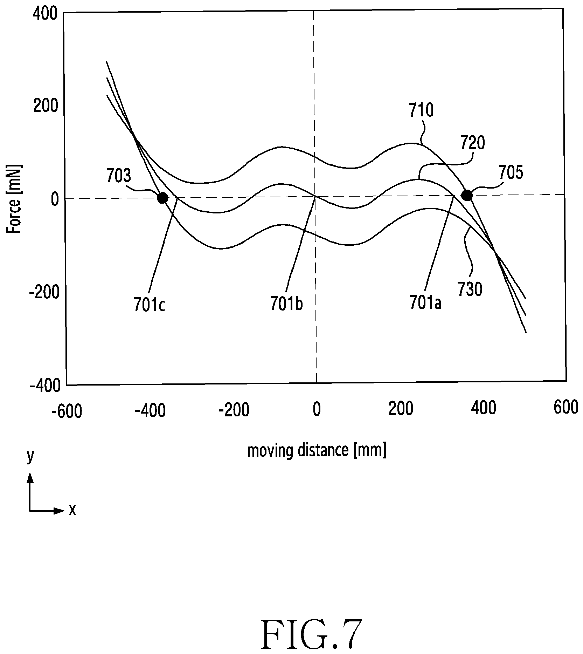

FIG. 7 is a graph showing a relationship between a force exerting on a driving portion and a moving distance of the driving portion in a camera module according to an embodiment.

Referring to FIG. 7, the x axis represents the position of the driving portion based on the fixing portion 300, and the y axis represents the force exerting on the driving portion according to relative positions of the fixing portion 300 and the driving portion. In this case, a position of x = 0 may indicate that the driving portion is positioned at the center of the fixing portion 300. According to an embodiment, the driving portion may include a yoke (e.g., the yoke 410 of FIG. 4A and FIG. 4B).

According to an embodiment, a reference numeral 710 indicates the force according to the position of the driving portion based on the fixing portion 300, in case that the current is applied to the first coil 325 of the camera module 180. According to an embodiment, in case that the current is applied to the first coil 325, an electromagnetic force may be induced to the protrusion of the first portion 321 of the first magnetic body (e.g., the first magnetic body 320 of FIG. 3A and FIG. 3B). For example, in case that the current is applied to the first coil 325 and the electromagnetic force is induced around the first coil 325, the protrusion of the first portion 321 of the first magnetic body 320 may serve as a channel where a magnetic flux flows with the first protrusion 420 of the yoke 410, because a gap (e.g., an air gap) between the protrusion of the first portion 321 of the first magnetic body and the yoke 410 is small. According to an embodiment, in case that the electromagnetic force is induced to the protrusion of the first portion 321 of the first magnetic body 320, the driving portion may move to a first point 705 where the force becomes zero. For example, the driving portion may move in the first direction parallel to the optical axis to move to the first point 705.

According to an embodiment, a reference numeral 720 indicates the force according to the position of the driving portion based on the fixing portion 300, in case that the current is applied to neither the first coil 325 nor the second coil 335 of the camera module 180. According to an embodiment, in case that the current is applied to neither the first coil 325 nor the second coil 335, the driving portion may be fixed at three positions. For example, the driving portion may move to and be fixed at the point (e.g., 701a, 701b, or 701c) where the force becomes zero. According to an embodiment, in case that the driving portion is fixed to one of the three points 701a, 701b, and 701c, the second protrusion (e.g., the second protrusion 430 of FIG. 4B) may face the second magnetic body 330 while the first protrusion (e.g., the first protrusion 420 of FIG. 4B) of the two protrusions of the yoke 410 included in the driving portion may face the first magnetic body 320.

According to an embodiment, a reference numeral 730 indicates the force according to the position of the driving portion based on the fixing portion 300, in case that the current is applied to the second coil 335 of the camera module 180. According to an embodiment, in case that the current is applied to the second coil 335, the electromagnetic force may be induced to the protrusion of the first portion 331 of the second magnetic body (e.g., the second magnetic body 330 of FIG. 3A and FIG. 3B), wherein the driving portion may move to a second point 703 where the force becomes zero. The description that the electromagnetic force is induced to the protrusion of the first portion 331 of the first magnetic body 320 explained in the reference numeral 710 may be applied to the electromagnetic force induced to the protrusion of the first portion 331 of the second magnetic body 330. For example, the driving portion may move in the second direction opposite to the first direction to move to the second point 703.

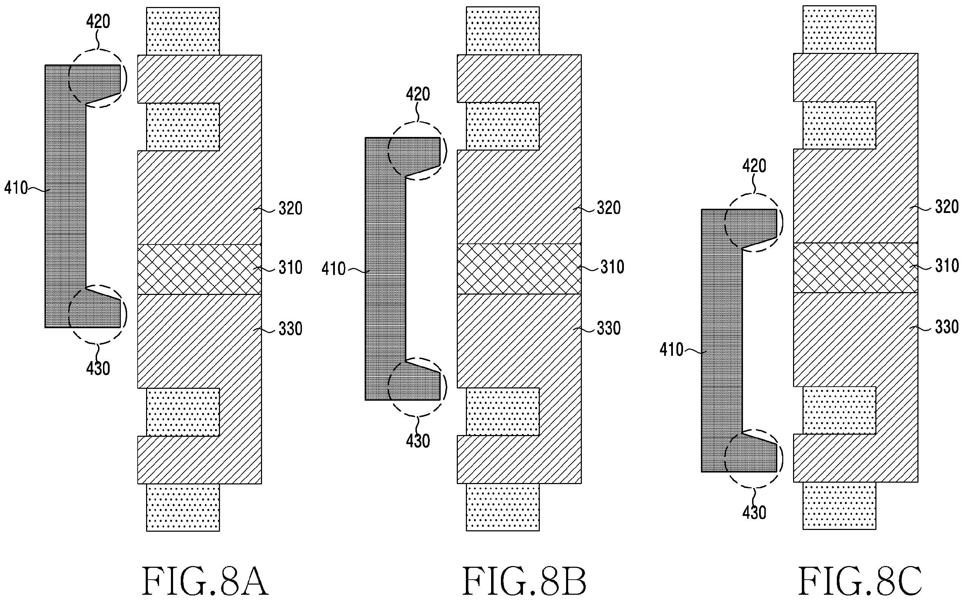

FIG. 8 is a diagram illustrating that a yoke 410 is fixed to a specific position to face a fixing portion (e.g., the fixing portion 300 of FIG. 3A and FIG. 3B) in a camera module (e.g., the camera module 180 of FIG. 1 and FIG. 2) according to various embodiments.

Referring to FIG. 8, in the camera module 180 according to an embodiment, a magnetic force may be generated by the first magnetic body 320, the second magnetic body 330 and the magnet 310 included in the fixing portion 300. According to an embodiment, the yoke 410 of the camera module 180 may be fixed at a specific position by the magnetic force generated by the fixing portion 300. For example, the yoke 410 may be fixed while facing the fixing portion 300 at a position (e.g., the three points 701a, 701b, and 701c of FIG. 7) where the force exerting on the yoke becomes zero.

According to an embodiment, as shown in (a), the yoke 410 may be fixed while facing the fixing portion 300 at a first position (e.g., a position facing an upper end of the fixing portion 300). Herein, the first position may correspond to the reference numeral 701a of FIG. 7. According to an embodiment, in case that the yoke 410 faces the fixing portion 300 at the first position, the second protrusion 430 may face the second magnetic body 330 while the first protrusion 420 faces the first magnetic body 320.

According to an embodiment, as shown in (b), the yoke 410 may be fixed while facing the fixing portion 300 at a second position (e.g., a position facing the center of the fixing portion 300). Herein, the second position may correspond to the reference numeral 701b of FIG. 7. According to an embodiment, in case that the yoke 410 faces the fixing portion 300 at the second position, the second protrusion 430 may face the second magnetic body 330 while the first protrusion 420 faces the first magnetic body 320.

According to an embodiment, as shown in (c), the yoke 410 may be fixed while facing the fixing portion 300 at a third position (e.g., a position facing a lower end of the fixing portion 300). Herein, the third position may correspond to the reference numeral 701c of FIG. 7. According to an embodiment, in case that the yoke 410 faces the fixing portion 300 at the third position, the second protrusion 430 may face the second magnetic body 330 while the first protrusion 420 faces the first magnetic body 320.

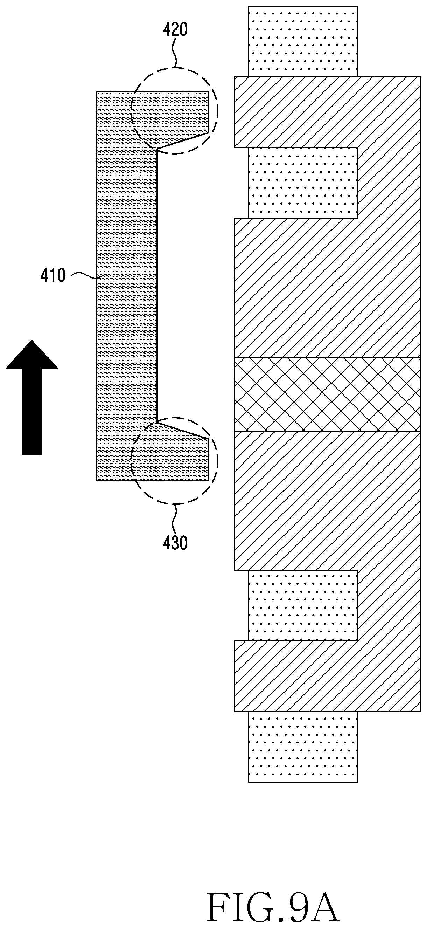

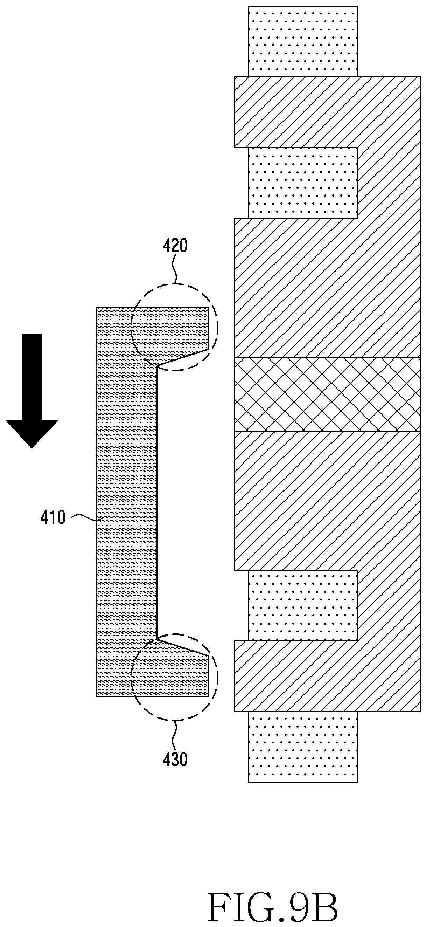

FIG. 9A is a diagram illustrating that a driving portion moves in a first direction in case that a current is applied to a first coil (e.g., the first coil 325 of FIG. 3A and FIG. 3B) in a camera module (e.g., the camera module 180 of FIG. 1 and FIG. 2) according to an embodiment. FIG. 9B is a diagram illustrating that the driving portion moves in a second direction in case that the current is applied to a second coil (e.g., the second coil 335 of FIG. 3A and FIG. 3B) in the camera module (e.g., the camera module 180 of FIG. 1 and FIG. 2) according to an embodiment. In the disclosure, the driving portion may be referred to as a driving circuit. According to an embodiment, the driving portion may include a yoke 410.

Referring to FIG. 9A, according to an embodiment, in case that the current is applied to the first coil 325, an electromagnetic force may be induced to a protrusion of a first portion 321 of a first magnetic body (e.g., the first magnetic body 320 of FIG. 3A and FIG. 3B), wherein the yoke 410 included in the driving portion may move to a position where the force becomes zero. For example, the driving portion may move in the first direction (e.g., upward) parallel to the optical axis to move to the point where the force becomes zero (e.g., the first point 705 of FIG. 7).

According to an embodiment, while the yoke 410 moves to a first point (e.g., the first point 705 of FIG. 7), a first protrusion 420 and a second protrusion 430 of the yoke 410 may face magnetic bodies having different polarities. For example, while the first protrusion 420 faces the first magnetic body 320, the second protrusion 430 may face the second magnetic body 330.

In case that the current is applied to the first coil 325, the driving portion of the camera module 180 according to an embodiment may move a lens assembly (e.g., the lens assembly 210 of FIG. 2) in the first direction parallel to the optical axis by controlling the current applied to the first coil 325.

Referring to FIG. 9B, according to an embodiment, in case that the current is applied to the second coil 335, an electromagnetic force may be induced to a protrusion of a first portion 331 of a second magnetic body (e.g., the second magnetic body 330 of FIG. 3A and FIG. 3B), wherein the yoke 410 included in the driving portion may move to a position where the force becomes zero. For example, the driving portion may move in the second direction (e.g., downward) opposite to the first direction to move to the point where the force becomes zero (e.g., the second point 703 of FIG. 7).

According to an embodiment, while the yoke 410 moves to the second point (e.g., the second point 703 of FIG. 7), the first protrusion 420 and the second protrusion 430 of the yoke 410 may face the magnetic bodies having different polarities. For example, while the first protrusion 420 faces the first magnetic body 320, the second protrusion 430 may face the second magnetic body 330.

In case that the current is applied to the second coil 335, the driving portion of the camera module 180 according to an embodiment may move the lens assembly 210 in the second direction opposite to the first direction by controlling the current applied to the second coil 335.

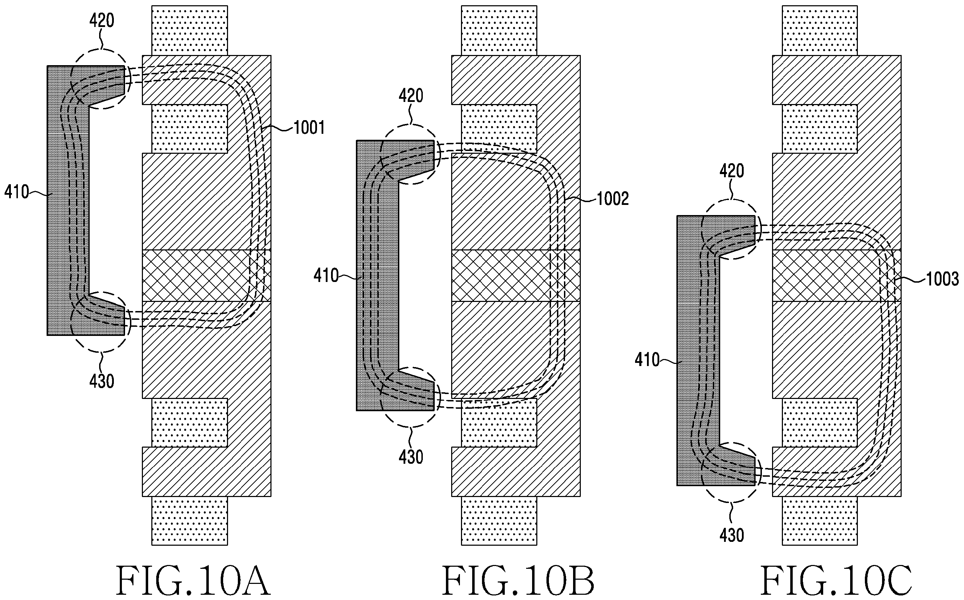

FIG. 10 is a diagram illustrating magnetic forces 1001, 1002, and 1003 generating in a camera module (e.g., the camera module 180 of FIG. 1 and FIG. 2) according to various embodiments.

According to an embodiment, the electronic device 101 may move the lens assembly 210 in the optical axis direction by controlling the current applied to the first coil 325 or the second coil 335. For example, the electronic device 101 may perform the AF function by controlling the yoke 410 to vertically move in the straight line, by the electromagnetic force induced by applying the current to the first coil (e.g., the first coil 325 of FIG. 3A and FIG. 3B) or the second coil (e.g., the second coil 335 of FIG. 3A and FIG. 3B). The electronic device 101 may perform the AF based on the driving force generated by controlling the current applied to the first coil 325 and/or the second coil 335.

Referring to FIG. 10, in an embodiment, in case that the current applied to the first coil 325 and/or the second coil 335 is cut, the yoke 410 may be fixed at a designated position based on the fixing portion 300. Also, according to an embodiment, even if the current is not applied to the first coil 325 and the second coil 335, the yoke 410 may be fixed at the designated position by the magnetic force 1001, 1002, or 1003 generating at the fixing portion 300 (e.g., the magnet 310, the first magnetic body 320, the second magnetic body 330). For example, the designated position may include any one of the positions (a), (b), or (c) of FIG. 10. In the disclosure, the specific position where the yoke 410 is fixed based on the fixing portion 300 may be referred to as the designated position. For example, the yoke 410 may be fixed to any one of the positions (a), (b), or (c) of FIG. 10. The positions of the yoke 410 shown in (a), (b) and (c) of FIG. 10 may correspond to the positions of the yoke 410 shown in (a), (b) and (c) of FIG. 8 respectively. In addition, the positions of the yoke 410 shown in (a), (b), and (c) of FIG. 10 may correspond to the reference numerals 701a, 701b, and 701c respectively in the graph of FIG. 7. That is, the position of the yoke 410 shown in (a), (b), and (c) of FIG. 10 may indicate the point where the force exerted on the driving portion or the yoke 410 by the magnetic force of the magnet 310 is zero.

According to an embodiment, in case that the electronic device 101 applies and blocks the current to the first coil 325 and/or the second coil 335, the yoke 410 may be fixed to any one of the positions of the yoke 410 shown in (a), (b), or (c) of FIG. 10. For example, in case that the current is not applied to the first coil 325 and the second coil 335, the yoke 410 may be fixed at the closest position of the yoke 410 among (a), (b), or (c).

According to an embodiment, while the yoke 410 is fixed to any one of the positions of (a), (b), or (c) of FIG. 10, even if the lens assembly 210 is moved by a physical force (e.g., an external shock shaking the electronic device 101) greater than the magnetic force which secures the yoke 410, it may be fixed to another one of the positions (a), (b), or (c) of FIG. 10. For example, in case that the yoke 410 is fixed to the position (e.g., the reference numeral 701a of FIG. 7) of the yoke 410 shown in (a) of FIG. 10 and the driving portion (e.g., the yoke 410) receives the physical impact and moves in the second direction (e.g., downward), the yoke 410 may be fixed at the position of the yoke 410 shown in (b) of FIG. 10 or at the position of the yoke 410 shown in (c) of FIG. 10. That is, the yoke 410, which moves out of the position (a), may be fixed at the position (b) or (c) again by the magnetic force.

According to various embodiments of the disclosure, even if power is blocked or the current is not applied to the first coil 325 and the second coil 335, the three points (e.g., 701a, 701b, and 701c of FIG. 7) may fix the yoke 410 and accordingly a phenomenon in which the lens assembly 210 leaves its physical driving range to collide with another component or to excessively shake inside the housing 630 may be reduced. Hence, the electronic device 101 according to the disclosure may reduce the shock and the shaking by moving the driving portion using the electromagnetic force and simultaneously fixing it at the three points using the magnetic force.

According to an embodiment, in case that the power is cut, the first protrusion 420 and the second protrusion 420 of the yoke 410 may face two magnetic bodies having different polarities among the two magnetic bodies included in the fixing portion 300 regardless of the position of securing the yoke 410.

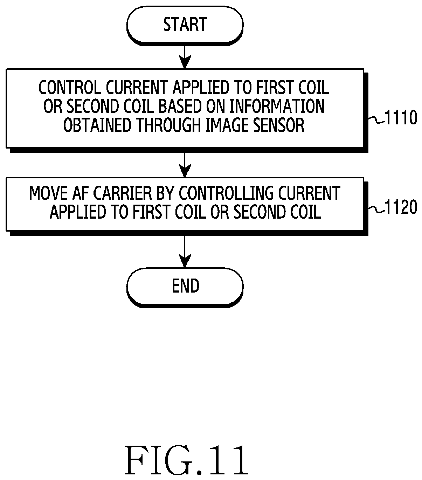

FIG. 11 is a flowchart for moving an AF carrier (e.g., the AF carrier 610 of FIG. 6) in an electronic device (e.g., the electronic device 101 of FIG. 1) according to an embodiment.

Referring to FIG. 11, the electronic device 101 according to an embodiment may control the current applied to the first coil (e.g., the first coil 325 of FIG. 3A and FIG. 3B) or the second coil (e.g., the second coil 335 of FIG. 3A and FIG. 3B) based on information obtained through the image sensor (e.g., the image sensor 230 of FIG. 2) in operation 1110.

According to an embodiment, the image sensor 230 in the electronic device 101 may acquire at least one image frame based on the light passing through the lens assembly (e.g., the lens assembly 210 of FIG. 2). According to an embodiment, the electronic device 101 may perform the AF function based on the at least one image frame acquired. The electronic device 101 may perform the AF function by moving the lens assembly 210 in the direction parallel to the optical axis. For example, the electronic device 101 may control the current applied to the first coil 325 to perform the AF function by moving the lens assembly 210 in the optical axis direction. Also, for example, the electronic device 101 may control the current applied to the second coil 335 to perform the AF function by moving the lens assembly 210 in the optical axis direction.

According to an embodiment, the electronic device 101 may identify a region of interest (ROI) in the image frame obtained from the image sensor 230, and move the lens assembly 210 to focus on a subject included in the ROI. For example, the electronic device 101 may perform the AF function by measuring a distance between the subject included in the ROI and the electronic device 101. For example, the electronic device 101 may recognize (or identify) at least one object in the image frame, and perform the AF function to focus on the object. As another example, the electronic device 101 may receive a user input for selecting at least a part of at least one object included in the image frame, and focus on the at least the part of the object for which the user input is received. As yet another example, the electronic device 101 may focus on a region within the image frame corresponding to a specific region of the image sensor 230. Besides, various methods may be used for the electronic device 101 to perform the AF.

According to an embodiment, the electronic device 101 may move the AF carrier 610 by controlling the current applied to the first coil 325 or the second coil 335 in operation 1120. According to an embodiment, to perform the AF based on the position of the subject, the electronic device 101 may move the lens assembly 210 together with the AF carrier 610 along the optical axis. For example, the electronic device 101 may move the AF carrier 610 in the first direction (e.g., upward) parallel to the optical axis by controlling the current applied to the first coil 325. Also, for example, the electronic device 101 may move the AF carrier 610 in the second direction (e.g., downward) parallel to the optical axis by controlling the current applied to the second coil 335.

According to an embodiment, the electronic device 101 may identify the position of the lens assembly 210 through the hall sensor (e.g., the hall sensor 603 of FIG. 6) fixed to the housing (e.g., the housing 630 of FIG. 6) and the hall magnet (e.g., the hall magnet 601 of FIG. 6) fixed to the AF carrier 610. According to an embodiment, the electronic device 101 may move the AF carrier 610 to adjust the position of the lens assembly 210, based on the position of the lens assembly 210 acquired through the hall sensor 603.

According to an embodiment, the electronic device 101 may compensate for the shake of the electronic device 101 together with the AF using the movement of the AF carrier. According to an embodiment, the electronic device 101 may further include an optical image stabilization (OIS) carrier (not shown) coupled with the motion sensor (e.g., the sensor module 176 of FIG. 1) and the lens assembly 210 to move the lens assembly 210 on a plane perpendicular to the optical axis. According to an embodiment, the electronic device 101 may detect the movement of the electronic device 101 using the motion sensor. According to an embodiment, the electronic device 101 may recognize a subject by driving the image sensor 230, and move the lens assembly 210 in the direction parallel to the optical axis based on the position of the subject (e.g., the distance between the electronic device 101 and the subject). According to an embodiment, the electronic device 101 moves the OIS carrier (or, the lens assembly 210) in the direction perpendicular to the optical axis, based on movement information of the electronic device 101 obtained through the motion sensor.

As set forth above, a camera module (e.g., the camera module 180 of FIG. 1 and FIG. 2) according to an embodiment may include a lens assembly (e.g., the lens assembly 210 of FIG. 2) aligned along an optical axis, an AF carrier (e.g., the AF carrier 610 of FIG. 6) for moving along the optical axis together with the lens assembly, and a housing (e.g., the housing 630 of FIG. 6) for accommodating the AF carrier, a yoke (e.g., the yoke 610 of FIG. 4A and FIG. 4B) may be fixed to a first outer surface of side surfaces of the AF carrier, the yoke may include a first portion 405 having a first length 401 in the optical axis direction and two protrusions (e.g., the first protrusion 420, the second protrusion 430) which protrude toward the housing from both ends of a first portion 405, a first magnetic body (e.g., the first magnetic body 320 of FIG. 3A and FIG. 3B), a magnet (e.g., the magnet 310 of FIG. 3A and FIG. 3B) and a second magnetic body (e.g., the second magnetic body 330 of FIG. 3A and FIG. 3B) may be fixed in order in a direction parallel to the optical axis in a first inner surface facing the first outer surface of the AF carrier among the side surfaces of the housing, the magnet may have a first pole on a surface contacting the first magnetic body, and a second pole opposite to the first pole on a surface contacting the second magnetic body, and a second protrusion (e.g., the second protrusion 430 of FIG. 4A and FIG. 4B) may face the second magnetic body while a first protrusion (e.g., the first protrusion 420 of FIG. 4A and FIG. 4B) of the two protrusions of the yoke faces the first magnetic body.

According to an embodiment, the camera module may further include a first coil spaced apart from the magnet by a first distance in a first direction parallel to the optical axis and disposed parallel to the first inner surface, a second coil spaced apart from the magnet by the first distance in a second direction opposite to the first direction and disposed parallel to the first inner surface, and a driving circuit electrically connected to the first coil and the second coil, and the driving circuit may move the lens assembly along the optical axis by controlling an electric current applied to at least one of the first coil or the second coil.

According to an embodiment, the driving circuit may move the lens assembly in the first direction by controlling the electric current applied to the first coil.

According to an embodiment, the driving circuit may move the lens assembly in the second direction by controlling the electric current applied to the second coil.

According to an embodiment, in case that the electric current is not applied to the first coil and the second coil, the yoke may be fixed at a designated position to face the first magnetic body, the second magnetic body and the magnet.

According to an embodiment, the first coil may be wound and disposed around an end of the first magnetic body, and the second coil may be wound and disposed around an end of the second magnetic body.

According to an embodiment, the first length of the first portion of the yoke may be longer than a sum of a second length of the first magnetic body in the optical axis direction and a third length of the magnet in the optical axis direction, and shorter than a sum of the second length, the third length and a fourth length of the second magnetic material in the optical axis direction.

According to an embodiment, the camera module may include a hall sensor fixed to the housing and a hall magnet fixed to the AF carrier, and may measure a position of the lens assembly using the hall sensor and the hall magnet.

According to an embodiment, the first magnetic body and the second magnetic body may have different polarities among an N pole and an S pole.

According to an embodiment, the yoke may be spaced apart from the first magnetic body, the second magnetic body and the magnet by a specific interval in a direction perpendicular to the optical axis and fixed to the first outer surface of the AF carrier.

As set forth above, an electronic device (e.g., the electronic device 101 of FIG. 1) according to an embodiment may include at least one processor, and a camera module connected to the at least one processor, the camera module may include a lens assembly aligned along an optical axis, an image sensor for acquiring light passing through the lens assembly, an AF carrier for moving along the optical axis together with the lens assembly, the AF carrier including a yoke disposed on a first outer surface of side surfaces of the AF carrier, and a housing for accommodating the AF carrier, the housing may include a first magnetic body fixed to a first inner surface facing the first outer surface of the AF carrier among the side surfaces of the housing, a second magnetic body, and a magnet disposed between the first magnetic body and the second magnetic body, a first coil spaced apart from the magnet by a first distance in a first direction parallel to the optical axis and disposed parallel to the first inner surface, and a second coil spaced apart from the magnet by the first distance in a second direction opposite to the first direction and disposed parallel to the first inner surface, the magnet may have a first pole on a surface contacting the first magnetic body, and a second pole opposite to the first pole on a surface contacting the second magnetic body, the yoke may include a first portion having a first length in the optical axis direction and two protrusions which protrude toward the housing from both ends of a first portion, while a first protrusion of the two protrusions of the yoke faces the first magnetic body, a second protrusion may face the second magnetic body, and the at least one processor may control an electric current applied to the first coil or the second coil, based on information acquired through the image sensor, and move the AF carrier along the optical axis by controlling the electric current applied to the first coil or the second coil.

According to an embodiment, the electronic device may further include a motion sensor and an OIS carrier coupled to the lens assembly and moving the lens assembly on a plane perpendicular to the optical axis, and the at least one processor may detect a movement of the electronic device using the motion sensor, recognize a subject by driving the image sensor, move the lens assembly in a direction parallel to the optical axis based on a position of the subject, and move the OIS carrier in a direction perpendicular to the optical axis based on the movement of the electronic device.

According to an embodiment, the at least one processor may move the lens assembly in the first direction by controlling the electric current applied to the first coil.

According to an embodiment, the at least one processor may move the lens assembly in the second direction by controlling the electric current applied to the second coil.

According to an embodiment, in case that the electric current is not applied to the first coil and the second coil, the yoke may be fixed at a designated position to face the first magnetic body, the second magnetic body and the magnet.

According to an embodiment, the first coil may be wound and disposed around an end of the first magnetic body, and the second coil may be wound and disposed around an end of the second magnetic body.

According to an embodiment, the first length of the first portion of the yoke may be longer than a sum of a second length of the first magnetic body in the optical axis direction and a third length of the magnet in the optical axis direction, and shorter than a sum of the second length, the third length and a fourth length of the second magnetic material in the optical axis direction.

According to an embodiment, the electronic device may include a hall sensor fixed to the housing and a hall magnet fixed to the AF carrier, and the at least one processor may measure the position of the lens assembly using the hall sensor and the hall magnet.

According to an embodiment, the first magnetic body and the second magnetic body may have different polarities among an N pole and an S pole.

According to an embodiment, the yoke may be spaced apart from the first magnetic body, the second magnetic body and the magnet in a direction perpendicular to the optical axis by a specific interval and fixed to the first outer surface of the AF carrier.

## Claims

1. A camera module comprising:
a lens assembly aligned along an optical axis;
an auto focus (AF) carrier for moving along the optical axis together with the lens assembly; and
a housing for accommodating the AF carrier,
wherein a yoke is fixed to a first outer surface of side surfaces of the AF carrier, and the yoke comprises a first portion having a first length in the optical axis direction and two protrusions which protrude toward the housing from both ends of a first portion,
wherein a first magnetic body, a magnet and a second magnetic body are fixed in order in a direction parallel to the optical axis in a first inner surface facing the first outer surface of the AF carrier among the side surfaces of the housing,
wherein the magnet has a first pole on a surface contacting the first magnetic body, and a second pole opposite to the first pole on a surface contacting the second magnetic body, and
wherein a second protrusion faces the second magnetic body while a first protrusion of the two protrusions of the yoke faces the first magnetic body.

2. The camera module of claim 1, further comprising:
a first coil spaced apart from the magnet by a first distance in a first direction parallel to the optical axis and disposed parallel to the first inner surface;
a second coil spaced apart from the magnet by the first distance in a second direction opposite to the first direction and disposed parallel to the first inner surface; and
a driving circuit electrically connected to the first coil and the second coil,
wherein the driving circuit moves the lens assembly along the optical axis by controlling an electric current applied to at least one of the first coil or the second coil.

3. The camera module of claim 2, wherein the driving circuit moves the lens assembly in the first direction by controlling the electric current applied to the first coil.

4. The camera module of claim 2, wherein the driving circuit moves the lens assembly in the second direction by controlling the electric current applied to the second coil.

5. The camera module of claim 2, wherein, in case that the electric current is not applied to the first coil and the second coil, the yoke is fixed at a designated position to face the first magnetic body, the second magnetic body and the magnet.

6. The camera module of claim 2, wherein the first coil is wound and disposed around an end of the first magnetic body, and the second coil is wound and disposed around an end of the second magnetic body.

7. The camera module of claim 1, wherein the first length of the first portion of the yoke is longer than a sum of a second length of the first magnetic body in the optical axis direction and a third length of the magnet in the optical axis direction, and shorter than a sum of the second length, the third length and a fourth length of the second magnetic material in the optical axis direction.

8. The camera module of claim 1, comprising:
a hall sensor fixed to the housing; and
a hall magnet fixed to the AF carrier,
wherein a position of the lens assembly is measured using the hall sensor and the hall magnet.

9. The camera module of claim 1, wherein the first magnetic body and the second magnetic body have different polarities among an N pole and an S pole.

10. The camera module of claim 1, wherein the yoke is spaced apart from the first magnetic body, the second magnetic body and the magnet by a specific interval in a direction perpendicular to the optical axis and fixed to the first outer surface of the AF carrier.

11. An electronic device comprising:
at least one processor; and
a camera module connected to the at least one processor,
wherein the camera module comprises:
a lens assembly aligned along an optical axis;
an image sensor for acquiring light passing through the lens assembly;
an auto focus (AF) carrier for moving along the optical axis together with the lens assembly, the AF carrier comprising a yoke disposed on a first outer surface of side surfaces of the AF carrier; and
a housing for accommodating the AF carrier, the housing comprising:
a first magnetic body fixed to a first inner surface facing the first outer surface of the AF carrier among the side surfaces of the housing, a second magnetic body, and a magnet disposed between the first magnetic body and the second magnetic body;
a first coil spaced apart from the magnet by a first distance in a first direction parallel to the optical axis and disposed parallel to the first inner surface, and
a second coil spaced apart from the magnet by the first distance in a second direction opposite to the first direction and disposed parallel to the first inner surface,
the magnet has a first pole on a surface contacting the first magnetic body, and a second pole opposite to the first pole on a surface contacting the second magnetic body,
wherein the yoke comprises a first portion having a first length in the optical axis direction and two protrusions which protrude toward the housing from both ends of a first portion,
while a first protrusion of the two protrusions of the yoke faces the first magnetic body, a second protrusion faces the second magnetic body,
wherein the at least one processor configured to:
control an electric current applied to the first coil or the second coil, based on information acquired through the image sensor, and
move the AF carrier along the optical axis by controlling the electric current applied to the first coil or the second coil.

12. The electronic device of claim 11, further comprising:
a motion sensor; and
an optical image stabilization (OIS) carrier coupled to the lens assembly and moving the lens assembly on a plane perpendicular to the optical axis,
wherein the at least one processor configured to:
detect a movement of the electronic device using the motion sensor,
recognize a subject by driving the image sensor,
move the lens assembly in a direction parallel to the optical axis based on a position of the subject,
move the OIS carrier in a direction perpendicular to the optical axis based on the movement of the electronic device.

13. The electronic device of claim 11, wherein the at least one processor configured to move the lens assembly in the first direction by controlling the electric current applied to the first coil.

14. The electronic device of claim 11, wherein the at least one processor configured to move the lens assembly in the second direction by controlling the electric current applied to the second coil.

15. The electronic device of claim 11, wherein, in case that the electric current is not applied to the first coil and the second coil, the yoke is fixed at a designated position to face the first magnetic body, the second magnetic body and the magnet.
